# EUROPÄISCHE PATENTSCHRIFT

(11) **EP 2 920 777 B1**
(45) Veröffentlichungstag und Bekanntmachung des Hinweises auf die Patenterteilung: **21.09.2016**
(21) Anmeldenummer: 13716960.3
(22) Anmeldetag: 09.04.2013
(51) Int. Cl.: G08G 1/0968, H04L 29/08, G08G 1/01, G08G 1/0967

(54) **VERFAHREN ZUM BEREITSTELLEN VON FAHRSTRECKENINFORMATIONEN MITTELS ZUMINDEST EINES KRAFTWAGENS**
METHOD FOR MAKING AVAILABLE ROUTE INFORMATION BY MEANS OF AT LEAST ONE MOTOR VEHICLE
PROCÉDÉ POUR FOURNIR DES INFORMATIONS DE TRAJET AU MOYEN D'AU MOINS UN VÉHICULE AUTOMOBILE

(30) Priorität: 13.11.2012 DE 102012022207
(43) Veröffentlichungstag der Anmeldung: 23.09.2015
(73) Patentinhaber: Audi AG, 85045 Ingolstadt (DE)
(72) Erfinder: HAINZLMAIER, Andre, 85290 Geisenfeld (DE); STREIT, Walter, 85049 Ingolstadt (DE)
(74) Vertreter: Bauer, Dominik Michael
(86) Internationale Anmeldenummer: PCT/EP2013/001043
(87) Internationale Veröffentlichungsnummer: WO 2014/075747

(56) Entgegenhaltungen:
- EP-A1- 1 631 103
- US-A1- 2003 060 232

## Beschreibung

Die Erfindung betrifft ein Verfahren zum Bereitstellen einer aktuellen Verkehrsinformation über eine Verkehrssituation auf einer Fahrstrecke und/oder über den Zustand der Fahrstrecke. Zum Ermitteln der Fahrstreckeninformation bedient sich das Verfahren zumindest eines Kraftwagens, welcher sich auf der Fahrstrecke befindet. Ein Verfahren dieser Art ist beispielsweise aus der DE 10 2010 022 707 A1 bekannt.

Nach dem aus dieser Druckschrift bekannten Verfahren werden Bilddaten einer Vielzahl von Orten von einer Vielzahl von Bilderfassungseinrichtungen, die jeweils in einem Fahrzeug angeordnet sind, aufgenommen. Zusätzlich wird der zugehörige Ort und der Zeitpunkt der Aufnahme erfasst. Die Bilddaten werden analysiert, und aus den Bilddaten werden Angaben einer bestimmten Kategorie extrahiert, beispielsweise Benzinpreise einer in den Bilddaten erkennbaren Tankstelle. Diese extrahierten Informationen werden an eine zentrale Datenbasis übermittelt, wo sie zur Ausgabe an andere Fahrzeuge bereitgestellt werden.

Aus der DE 10 2011 106 295 A1 ist es bekannt, dass von Kraftfahrzeugen stammende, einen Verkehrszustand beschreibende Informationsdaten an einen zentralen Dienstanbieter gesendet werden. Dieser kann dazu verwendet werden, die Informationsdaten zu verändern und zu ergänzen, um hieraus für ein Verkehrsinformationssystem Verkehrsinformationen zu berechnen.

Dokument US 2003/060232 A1 offenbart eine Fahrzeug-montierte Kommunikationsvorrichtung, die es ermöglicht, mit einer Navigationsfunktion verknüpfte Informationen von einer Übermittlungsquelle und einem Empfangsende zu erhalten. Die Fahrzeug-montierte Kommunikationsvorrichtung umfasst ein mit einer externen Einheit verbundenes Mobiltelefonterminal, eine Fahrzeugnavigationsfunktion, eine Modem zum Übermitteln und Empfangen von Daten zwischen Fahrzeugen über das Mobiltelefonterminal.

Dokument EP 1 631 103 A1 offenbart ein Verfahren zum Aufbau einer Kommunikationsverbindung zwischen Endgeräten. Das Verfahren umfasst die Schritte: Empfangen einer Verbindungsanforderung, Bestimmen geografischer Positionen von Teilnehmern einer Benutzergruppe, Korrelieren der geografischen Positionen mit Straßennetz-Daten und dynamisches Zuweisen von Straßen-Adressen an die Teilnehmer, wobei die Straßen-Adressen die Position von Teilnehmern bezüglich des Straßennetzes widerspiegeln und eine Straßen-Kennung, eine Kennung der Bewegungsrichtung, eine Straßen-Sektor-Kennung und eine Kennung zur Unterscheidung von Teilnehmern im selben Straßen-Sektor enthalten, wobei Teilnehmer-Daten der Teilnehmer der Benutzergruppe bereitgehalten werden, wobei die Teilnehmer-Daten jedes Teilnehmers eine oder mehrere Netzwerkadressen des Teilnehmers und zusätzliche Informationen über den Teilnehmer enthalten, die in der Verbindungsanforderung benutzt werden, den Teilnehmer auszuwählen, und Weiterleiten des Anrufs an ein oder mehrere mobile Endgeräte von Teilnehmern der Benutzergruppe auf der Grundlage der Verbindungsanforderung und der Zuweisung von Straßen-Adressen.

Dokument WO 03/063540 A1 offenbart ein Verfahren, in dem ein Mobiltelefon Kommunikations-Adressen eines zweiten Mobiltelefons empfängt und diese Kommunikationen über ein drittes Mobiltelefon an das zweite Mobiltelefon weiterleitet. Netzwerkadressen werden automatisch konfiguriert, und das informationszentrische Routing-Protokoll wird mindestens teilweise auf der Grundlage von Variablen abgeleitet, die die Netzwerkadresse enthalten. Eine Kommunikation wird über eine andere mobile Einrichtung und entsprechend dem informations-zentrischen Routing-Protokoll an eine mobile Einrichtung geleitet.

Dokument WO 02/25973 A1 offenbart, in oder in der Nähe einer Parkbucht eine Kennung anzuzeigen. Die Kennung ist für die Parkbucht oder eine Gruppe von Parkbuchten einzigartig. Benutzer der Parkbucht benutzen die Kennung als Adresse, um von einer mobilen drahtlosen Einrichtung einen entfernten Dienstbetreiber zu kontaktieren. Der entfernte Dienstbetreiber ermittelt die Identität des Benutzers der mobilen drahtlosen Einrichtung und stellt dem Benutzer eine geeignete Summe in Rechnung.

Die in einem zentralen Datenserver zusammenfließenden Informationen müssen in der Regel stark zusammengefasst werden, um Verkehrsinformationen zu gewinnen, die für die vielen Fahrer aussagekräftig sind, die diese Verkehrsinformationen erhalten. Hierdurch gehen aber Details verloren, die für einzelne Fahrer in bestimmten Situationen von Nutzen sein können. So kann es für einen Fahrer hilfreich sein, kurzfristig zu erfahren, was z.B. in einem Stau weiter vorne passiert oder welche Straßenverhältnisse sich in den Nebenstraßen eines bestimmten Zielorts aufgrund der aktuelle Wetterlage gerade ergeben.

Im Zusammenhang mit dem Übertragen von Dateien zwischen zwei Personalcomputern über das Internet ist bekannt, solche Daten über ein so genanntes Peer-to-Peer-Netzwerk zu übertragen. Ein Peer-to-Peer-Netzwerk ermöglicht es einem Computer (Rechner), in dem Peer-to-Peer-Netzwerk eine Suchanfrage betreffend einen bestimmten Dateinamen einer Datei zu stellen. Über das Peer-to-Peer-Netzwerk erfährt der Computer dann, auf welchem anderen Computer des Peer-to-Peer-Netzwerkes eine Datei mit einem solchen Dateinamen gespeichert ist. Hierzu wird dem suchenden Computer die Netzwerkadresse des Computers mit der Datei übermittelt. Der suchende Computer kann dann eine Anfrage betreffend das Übertragen der Datei an die Netzwerkadresse senden und so die Datei von dem anderen Computer erhalten.

Der Erfindung liegt die Aufgabe zugrunde, Fahrstreckeninformationen über eine Verkehrssituation auf einer Fahrstrecke und/oder Fahrstreckeninformationen über den Zustand der Fahrstrecke selbst verfügbar zu machen.

Die Aufgabe wird durch ein Verfahren gemäß Patentanspruch 1, eine Serveranordnung gemäß Patentanspruch 8, einen Kraftwagen gemäß Patentanspruch 9 und ein Computerprogrammprodukt gemäß Patentanspruch 11 gelöst. Vorteilhafte Weiterbildungen der Erfindung sind durch die Unteransprüche gegeben.

Der Erfindung liegt die Erkenntnis zugrunde, dass sich ein Peer-to-Peer-Netzwerk auch in der Weise betreiben lässt, dass mit ihm gezielt ein bestimmter Kraftwagen gesucht werden kann, der die gesuchten Fahrstreckeninformationen unmittelbar bereitstellen kann, weil er sich gerade auf der Fahrstrecke befindet. Hierzu wird erfindungsgemäß eine Autoflotte zu einem Peer-to-Peer-Netzwerk verknüpft. Das Verfahren bezieht sich entsprechend auf die Betriebsweise der einzelnen Kraftwagen. Gemäß dem Verfahren wird durch eine Kommunikationseinrichtung eines solchen Kraftwagens, also beispielsweise dessen Mobilfunkeinrichtung und einem damit gekoppeltes Infotainmentsystem, eine Kommunikationsverbindung zu einem Peer-to-Peer-Netzwerk aufgebaut und der Kraftwagen dort als ein Teilnehmer des Peer-to-Peer-Netzwerks angemeldet. Hierdurch wird eine Kommunikationsadresse des Kraftwagens, also beispielsweise seine IP-Adresse (IP - Internet Protocol) durch zumindest einem anderen Teilnehmer des Peer-to-Peer-Netzwerks ermittelbar. Das Peer-to-Peer-Netzwerk kann hierarchisch strukturiert sein, d.h. einen zentralen Netzwerkserver aufweisen, oder auch dezentral aus gleichberechtigten Teilnehmern gebildet sein.

Der Kraftwagen ist aber nicht nur passiver Teilnehmer des Peer-to-Peer-Netzwerks, sondern auch eine Quelle für die Fahrstreckeninformation. Hierzu wird durch eine Erfassungseinrichtung des Kraftwagens die Fahrstreckeninformation ermittelt: Dies kann beispielsweise dadurch geschehen, dass durch den Kraftwagen Kameradaten einer Kamera (also Videobilder oder Standbilder) und/oder Sensordaten anderer Sensoren des Kraftwagens erfasst und als die Fahrstreckeninformation bereitgestellt werden.

Wird nun durch die Kommunikationseinrichtung über das Peer-to-Peer-Netzwerk von einem anderen Teilnehmer des Peer-to-Peer-Netzwerks eine Anfrage betreffend die Fahrstreckeninformation empfangen, so wird durch die Kommunikationseinrichtung an diesen anfragenden Teilnehmer die ermittelte Fahrstreckeninformation gesendet. Der Kraftwagen verhält sich somit ähnlich wie ein Computer des Internets in einem Peer-to-Peer-Netzwerk für Dateien, also beispielsweise ein Computer des Peer-to-Peer-Netzwerks "Napster". Anstelle der sonst üblichen Dateien mit Musikdaten wird aber die aktuelle Fahrstreckeninformation verfügbar gemacht.

Das erfindungsgemäße Verfahren weist den Vorteil auf, dass von einem anderen Kraftwagen oder aber auch von einem Smartphone aus Echtzeit-Informationen über ganz spezifische Punkte auf einer bestimmten Fahrstrecke, also beispielsweise weiter vorne in einem Stau, bezogen werden können und eine Streckenwahl oder auch ein Fahrverhalten entsprechend dynamisch angepasst werden können. Durch die Vermeidung (Umfahrung) von Staus oder kurzfristig gesperrte Straßen kann somit nicht nur Treibstoff und Zeit eingespart werden, sondern letztlich auch die Fahrerentspanntheit durch ein flüssiges Vorankommen auf einer Fahrstrecke gefördert werden. Es kann beispielsweise aber auch zur Fahrerentspannung beitragen, wenn ein bereits im Stau stehender Fahrer über beispielsweise sein Smartphone oder sein Infotainmentsystem in dem Peer-to-Peer-Netzwerk nach einem Kraftwagen suchen kann, der weiter vorne im Stau steht, um sich einen Eindruck von der Stauursache zu verschaffen. Wird er fündig, so kann er bei diesem Kraftwagen beispielweise Kamerabilder anfordern und sich auf einem Bildschirm anzeigen lassen, um so einschätzen zu können, ob sich der Stau bald auflöst.

Um gezielter nach bestimmten Fahrstreckeninformationen suchen zu können, kann das erfindungsgemäße Verfahren wie folgt weitergebildet werden. Zweckmäßigerweise werden durch den Kraftwagen, welcher die Fahrstreckeninformationen im Peer-to-Peer-Netzwerk zum Abruf bereitstellt, an das Peer-to-Peer-Netzwerk zumindest einmal, bevorzugt wiederholt in vorbestimmten Zeitabständen, Beschreibungsdaten des Kraftwagens gesendet. Durch solche Beschreibungsdaten des Kraftwagens wird beispielweise der Typ der Fahrstreckeninformation, welcher durch den Kraftwagen bereitgestellt wird, und/oder eine aktuelle Position des Kraftwagens angegeben. Durch den Typ der Fahrstreckeninformation ist hierbei angegeben, ob es sich bei den Fahrstreckeninformationen beispielsweise um Kameradaten, Daten eines Regensensors oder auch einen aus Daten abgeleiteten Verkehrsbericht zur Verkehrssituation handelt. Ein solcher Verkehrsbericht kann beispielsweise aus der Durchschnittsgeschwindigkeit eines Kraftwagens ermittelt werden. Durch Übermitteln der Beschreibungsdaten ergibt sich der Vorteil, dass von einem anderen Teilnehmer des Peer-to-Peer-Netzwerks aus erkannt werden kann, von welchem Kraftwagen auf einer Fahrstrecke er welche Fahrstreckeninformationen anfordern kann.

Wie bereits ausgeführt, kann es sich bei den Fahrstreckeninformationen beispielsweise um Sensordaten zu einer Umgebung desjenigen Kraftwagens handeln, welcher die Fahrstreckeninformationen bereitstellt. Mit anderen Worten wird den anderen Teilnehmern des Peer-to-Peer-Netzwerks ein direkter Zugriff auf beispielsweise Kameradaten oder andere Sensordaten des Kraftwagens ermöglicht.

Als besonders geeignet hat es sich erwiesen, wenn durch die Erfassungseinrichtung des Kraftwagens die Sensordaten mittels zumindest eines der folgenden Sensoren erfasst werden: eine Kamera, einen Regensensor, ein Thermometer, einen Abstandssensor zum Ermitteln eines Abstands eines vorausfahrenden oder nachfolgenden Kraftwagens, einen Geschwindigkeitssensor, welcher die Fahrgeschwindigkeit des Kraftwagens ermittelt. Anhand von Sensordaten dieser Sensoren können Informationen über das Verkehrsaufkommen oder die Routenqualität (z.B. Schnee, Nässe, Verschmutzungen, Hindernisse auf der Fahrbahn oder Straßensperrungen, eine Breite der Straße) von einem anderen Teilnehmer des Peer-to-Peer-Netzwerks ermittelt werden, ohne dass hierzu in dem die Fahrstreckeninformation bereitstellenden Kraftwagen selbst eine aufwändige Analyse der Sensordaten durchzuführen ist. So ist es einem anfragenden Teilnehmer möglich, über das Peerto-Peer-Netzwerk zu unterschiedlichen Strecken beispielsweise zu überprüfen, ob sie verschneit sind oder beispielweise nach einem Regenguss überschwemmt sind. Handelt es sich hierbei um sehr kleine Gebiete, die den anfragenden Teilnehmer interessieren, so hat er mit dem heutigen Stand der Technik wenig Chancen, diese Informationen beispielsweise über einen Wetterdienst oder einen Verkehrsinformationsdienst zu erhalten.

Die Sensordaten werden bevorzugt anonymisiert übermittelt. Hierzu sieht eine Ausführungsform des Verfahrens vor, für den Fall, dass die Fahrstreckeninformation zumindest ein Kamerabild umfasst, durch eine Bildverarbeitungseinrichtung in dem zumindest einen Kamerabild zumindest ein vorbestimmtes Objekt, z.B. ein Fahrzeugkennzeichen und/oder ein Gesicht, zu suchen und unkenntlich zu machen. Dann kann der Empfänger des Kamerabilds diese Objekte nicht mehr erkennen. Die Bildverarbeitungseinrichtung kann dabei Bestandteil des die Fahrstreckeninformation bereitstellenden Kraftwagens sein oder aber auch Bestandteil eines anderen Geräts sein, über welches die Fahrstreckeninformationen an den anderen Teilnehmer des Peer-to-Peer-Netzwerks gesendet wird. Hierbei kann es sich beispielsweise um einen zentralen Netzwerkserver des Peer-to-Peer-Netzwerks handeln, der die Daten zwischen den Teilnehmern des Peer-to-Peer-Netzwerks über das Internet austauscht. Die Objektsuche kann auf einer an sich bekannten automatischen Objekterkennung basieren, wie sie z.B. im Zusammenhang mit der Gesichtserkennung in Fotographien genutzt wird.

Ein besonderer Vorteil des erfindungsgemäßen Verfahrens besteht darin, dass auch sehr individuelle Informationen berücksichtigt werden können, was bei zentralen Informationsdiensten nicht möglich ist, da diese die gesammelten Informationen zusammenfassen müssen, um einen allgemeingültigen Verkehrsbericht zu erzeugen. Bei dem erfindungsgemäßen Verfahren ist es dagegen gemäß einer ganz besonders vorteilhaften Weiterbildung vorgesehen, durch die Erfassungseinrichtung in dem Kraftwagen, welcher die Fahrstreckeninformation bereitstellt, anstatt oder neben den Sensordaten auch von einer in dem Kraftwagen befindlichen Person eine Eingabe eines Streckenberichts zu empfangen, also beispielsweise eine persönliche Einschätzung der Verkehrssituation aus Sicht dieser Person. Dieser Streckenbericht wird dann als Bestandteil der Fahrstreckeninformation an die Kommunikationseinrichtung ausgegeben, die sie dann in dem Peer-to-Peer-Netzwerk bereitstellt. So kann beispielsweise ein Fahrer des Kraftwagens als Streckenbericht angeben: "Der Stau löst sich gerade auf". Diese Nachricht können dann weitere, noch im Stau stehende Kraftwagen empfangen. Genauso kann ein Fahrer berichten, dass eine bestimmte Straße von besonders schlechter Qualität ist, weil sie beispielsweise von einem landwirtschaftlichen Fahrzeug oder einem Baustellenfahrzeug verschmutzt wurde. Auch diese, nur für einen sehr kleinen Fahrstreckenabschnitt gültige Information, kann dann anderen Fahrzeugen über das Peer-to-Peer-Netzwerk bereitgestellt werden.

Eine weitere, besonders vorteilhafte Weiterbildung des Verfahrens sieht vor, durch die Erfassungseinrichtung den Streckenbericht als ein Sprachsignal zu empfangen, d.h. die Person kann ihren Bericht einfach diktieren. Das Sprachsignal wird dann mit einer Speech-to-Text-Technologie in Textdaten umgewandelt. Dann ist die Person beim Verfassen des Streckenberichts nicht vom Verkehrsgeschehen abgelenkt. Zudem benötigt die Übertragung von Textdaten eine deutlich geringere Bandbreite als die Übertragung eines Sprachsignals.

Eine andere Form der Fahrstreckeninformation wird gemäß einer Ausführungsform des Verfahrens erzeugt, indem eine Analyseeinrichtung des Kraftwagens von einem Fahrverhalten des Kraftwagens abhängige Betriebsdaten des Kraftwagens ermittelt. Beispielsweise kann ein Beschleunigungsverhalten des Kraftwagens oder dessen durchschnittliche Fahrgeschwindigkeit analysiert werden. Auf Grundlage der Betriebsdaten kann dann ein Bestandteil der Fahrstreckeninformation gebildet werden. Hierdurch ergibt sich der Vorteil, dass nicht die Betriebsdaten selbst, also Sensordaten oder Daten von Steuergeräten, an andere Teilnehmer des Peer-to-Peer-Netzwerk übermittelt werden müssen, sondern gleich die kompakteren Analysedaten mit einem fertigen Analyseergebnis. Dies verringert die zum Übertragen der Fahrstreckeninformation benötigte Bandbreite bei der Übertragung. So ist es beispielsweise möglich, auf einer sehr holprigen Strecke die Aktivität eines aktiven Fahrwerks zu analysieren und hieraus auf die Straßenqualität Rückschlüsse zu ziehen und dann ein entsprechendes, die Straßenqualität beschreibendes Signal als Fahrstreckeninformation zu übermitteln. Dies stellt eine sehr kurze Information dar, während die einzelnen Steuersignale des aktiven Fahrwerks sehr viel mehr Daten darstellen.

Besonders zweckmäßig ist es, wenn durch die Analyseeinrichtung als Fahrstreckeninformation gleich ein konkreter Hinweis auf einen Stau oder stockenden Verkehr ausgegeben wird. Hierzu wird gemäß einer Weiterbildung des Verfahrens überprüft, ob eine Häufigkeit von Bremsmanövern innerhalb eines vorbestimmten Zeitraums größer als ein Grenzwert ist und/oder ein Abstand zu einem anderen Kraftwagen und/oder eine Geschwindigkeit des Kraftwagens geringer als ein Mindestwert ist. Ist zumindest eine dieser Bedingungen erfüllt, so wird ein Stau oder zumindest stockender Verkehr durch die Analyseeinrichtung signalisiert. Bei der genannten Geschwindigkeit kann es sich um eine Momentangeschwindigkeit oder aber auch um einen Mittelwert handeln, der aus mehreren, zu unterschiedlichen, vorbestimmten Zeitpunkten bestimmten Geschwindigkeitswerten gebildet ist. Auch bei dem Abstand kann es sich um einen Momentanwert oder auch um einen Mittelwert aus mehreren, zu vorbestimmten Zeitpunkten ermittelten Abstandswerten handeln.

Natürlich kann ein Kraftwagen, welcher Fahrstreckeninformationen in dem Peer-to-Peer-Netzwerk bereitstellt, auch Fahrstreckeninformationen von anderen Kraftwagen empfangen und für einen Fahrer des Kraftwagens nutzbar machen. Entsprechend sieht eine Weiterbildung des Verfahrens vor, dass durch eine Anzeigeeinrichtung des Kraftwagens an zumindest einem anderen Kraftwagen eine solche Anfrage ausgesendet wird und eine von dem zumindest einen anderen Kraftwagen erzeugte Fahrstreckeninformation empfangen wird und die empfangenen Fahrstreckeninformationen angezeigt werden. Werden mehrere Fahrstreckeninformationen von unterschiedlichen Kraftwagen angefragt und entsprechend empfangen, kann auch vorgesehen sein, dass diese Fahrstreckeninformationen zunächst analysiert werden und ein Ergebnis der Analyse angezeigt wird, also beispielsweise ein Hinweis auf einen Stau, falls die Fahrstreckeninformationen einer überwiegenden Anzahl der Kraftwagen auf eine verminderte Fahrgeschwindigkeit und/oder einen geringen Abstand der Kraftwagen zueinander hindeuten.

Zu der Erfindung gehört auch eine Serveranordnung des Internets, also ein über das Internet erreichbarer einzelner Computer oder auch ein Verbund aus mehreren Computern. Die Serveranordnung ist dazu ausgelegt, an zumindest einem Kraftwagen, der als Teilnehmer eines Peer-to-Peer-Netzwerks angemeldet ist und eine Ausführungsform des erfindungsgemäßen Verfahrens durchführt, eine jeweilige Anfrage zu einer Fahrstreckeninformation zu senden und eine jeweilige Fahrstreckeninformation dann von jedem Kraftwagen zu empfangen. Die Serveranordnung ist dazu ausgelegt, in Abhängigkeit von allen empfangenen Fahrstreckeninformationen einen Fahrstreckenbericht an zumindest einen Benutzer der Serveranordnung zu senden, also beispielsweise einen Fahrer eines bestimmten Kraftwagens oder auch einem Benutzer eines Smartphones, welches mit der Serveranordnung kommuniziert. Eine solche Serveranordnung kann beispielsweise in einem Straßenverkehrsamt bereitgestellt sein, welches mittels der aktuellen Fahrstreckeninformationen der Kraftwagen schneller auf aktuelle Gegebenheiten reagieren kann und z.B. Hindernisse schnellstmöglich von einer Fahrbahn entfernen kann oder aber auch andere Autofahrer genauer vor dem Ort und der Art des Hindernisses warnen kann. Bisher sind solche Überwachungen von Fahrstreckenabschnitten nur mit Hilfe von Kontrollfahrten möglich oder aber von Kameras aus, die auf Brücken, d.h. stationär, an bestimmten Fahrstreckenabschnitten angebracht sind. Die erfindungsgemäße Serveranordnung ermöglicht es nun, flexibel an all denjenigen Orten den Fahrstreckenzustand zu überprüfen, an welchen sich ein Kraftwagen befindet, der in dem Peer-to-Peer-Netzwerk angemeldet ist. Bei dem Fahrstreckenbericht kann es sich auch um eine Information zu einer alternativen Fahrroute handeln, wenn anhand der Fahrstreckeninformationen erkannt wird, dass der Benutzer der Serveranordnung ein vorbestimmtes Ziel schneller erreichen kann, wenn er die alternative Fahrroute nimmt, weil beispielsweise ein Stau die ursprünglich anvisierte Route blockiert.

Eine andere Ausführungsform der erfindungsgemäßen Serveranordnung sieht vor, Anfragen an mehrere Kraftwagen zu senden und von diesen jeweilige Fahrstreckeninformationen zu empfangen und die empfangenen Fahrstreckeninformationen gemäß einer vorbestimmten Verarbeitungsvorschrift zu einem Fahrstreckenbericht zusammenzufassen. So können in der bereits beschriebenen Weise durch die Erfassung, Sammlung und Analyse von Fahrstreckeninformationen zu Straßenabschnitten z.B. Mittelwerte berechnet werden und so auch berichtartige Informationen über eine bestimmte Route erzeugt und weitergeleitet werden.

Hierbei kann in vorteilhafter Weise auch vorgesehen werden, dass ein Wert betreffend eine Dringlichkeit des Fahrstreckenberichts ermittelt wird und der Fahrstreckenbericht nur dann an zumindest einen vorbestimmten Benutzer gesendet wird, falls der Wert ein vorbestimmtes Dringlichkeitskriterium erfüllt. Das Dringlichkeitskriterium kann bevorzugt von den einzelnen Benutzern vorgegeben werden, so dass diese bestimmen können, wann sie den Fahrstreckenbericht erhalten. Ist ein Benutzer beispielsweise an einem zügigen Vorankommen auf einer bestimmten Fahrroute interessiert, so kann er das Zusenden des Fahrstreckenberichts bereits dann durch ein entsprechendes Dringlichkeitskriterium veranlassen, falls anhand der Fahrstreckeninformationen durch die Serveranordnung erkannt wird, dass die Durchschnittsgeschwindigkeit auf einem bestimmten Streckenabschnitt kleiner als ein von dem Benutzer als Dringlichkeitskriterium vorgegebener Wert ist. Ist dagegen ein Benutzer nur daran interessiert, schwerwiegende Verkehrsbehinderungen zu erfahren, so kann als Dringlichkeitskriterium von dem Benutzer vorgegeben werden, dass er nur bei Stau oder stockendem Verkehr einen Fahrstreckenbericht erhalten möchte.

Ein weiterer Aspekt der Erfindung betrifft einen Kraftwagen. Der erfindungsgemäße Kraftwagen ist gemäß einer Ausführungsform dazu ausgelegt, in der beschriebenen Weise Fahrstreckeninformationen in einem Peer-to-Peer-Netzwerk gemäß einer Ausführungsform des erfindungsgemäßen Verfahrens bereitzustellen. Eine weitere Ausführungsform des erfindungsgemäßen Kraftwagens sieht vor, dass dieser zumindest dazu ausgelegt ist, aus dem Peer-to-Peer-Netzwerk Fahrstreckeninformationen zu empfangen. Er kann hierbei ebenfalls Fahrstreckeninformationen selbst in dem Peer-to-Peer-Netzwerk bereitstellen oder aber auch nur als Empfänger solcher Fahrstreckeninformationen ausgelegt sein. Eine weitere Ausführungsform des erfindungsgemäßen Kraftwagens sieht vor, dass dieser dazu ausgelegt ist, einen Fahrstreckenbericht, wie er bereits beschrieben wurde, von einer Ausführungsform der erfindungsgemäßen Serveranordnung zu empfangen und an einen Fahrer des Kraftwagens auszugeben. Eine in diesem Zusammenhang besonders bevorzugte Ausführungsform sieht vor, den Fahrstreckenbericht als akustisches Signal auszugeben und diesen bei Bedarf mittels einer Textto-Speech-Technologie von einer Textform in das Sprachsignal umzuwandeln. Durch Ausgeben von Sprachhinweisen an den Fahrer ergibt sich der Vorteil, dass sichergestellt ist, dass der Fahrer nicht durch beispielsweise Videoinformationen über andere Strecken abgelenkt wird.

Wie bereits ausgeführt, kann als ein weiterer Empfänger für die Fahrstreckeninformationen auch ein Smartphone, ein Tablet-PC oder auch ein Personal- oder Heimcomputer verwendet werden. Auch mit solchen Geräten ist es möglich, an einem Peer-to-Peer-Netzwerk teilzunehmen und von anderen Teilnehmern Fahrstreckeninformationen zu empfangen. Um ein mobiles Endgerät wie beispielsweise ein Smartphone oder ein Tablet-PC, oder auch einen Personalcomputer entsprechend umrüsten zu können, ist gemäß einem Aspekt der Erfindung ein Computerprogrammprodukt mit einem auf zumindest einem Speichermedium gespeicherten Programmcode bereitgestellt, welcher dazu ausgelegt ist, bei Ausführung durch ein mobiles Endgerät oder einen Personalcomputer an zumindest einen Kraftwagen eine jeweilige Anfrage zur Fahrstreckeninformation auszusenden und eine jeweilige Fahrstreckeninformation von jedem Kraftwagen zu empfangen und/oder einen Fahrstreckenbericht von einer Ausführungsform der erfindungsgemäßen Serveranordnung anzufordern und zu empfangen. Hierdurch ergibt sich der Vorteil, dass mit dem mobilen Endgerät oder einem Personalcomputer dessen Benutzer auch außerhalb eines Fahrzeugs über eventuelle Ereignisse auf einer geplanten Fahrroute Informationen bereitgestellt werden können, wie beispielsweise über eine Totalsperrung einer Autobahn oder sogar ein Vorschlag einer Alternativroute.

Eine nicht gesondert beanspruchte Weiterbildung des erfindungsgemäßen Computerprogrammprodukts sieht vor, dass Kalenderdaten einer Termindatenbank des mobilen Endgeräts oder des Personalcomputers dahingehend ausgewertet werden, wann sich der Benutzer des mobilen Endgeräts oder Personalcomputers voraussichtlich auf einer bestimmten Fahrstrecke befinden wird und dann in einem vorbestimmten Zeitraum vor diesem Termin zu den einzelnen Fahrstreckenabschnitten dieser Fahrroute von dort befindlichen Kraftwagen über das Peer-to-Peer-Netzwerk Fahrstreckeninformationen angefragt und dem Benutzer bereitgestellt werden oder aber auch von einer Serveranordnung ein Fahrstreckenbericht zu den einzelnen Fahrstreckenabschnitten zu den gegebenen Zeitpunkten angefordert werden.

Im Folgenden wird die Erfindung noch einmal genauer anhand eines konkreten Ausführungsbeispiels erläutert. Bei dem Beispiel stellen die beschriebenen Komponenten der Ausführungsformen und die beschriebenen Schritte der Verfahren jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Die dargestellten Ausführungsbeispiele stellen bevorzugte Ausführungsformen der Erfindung dar.

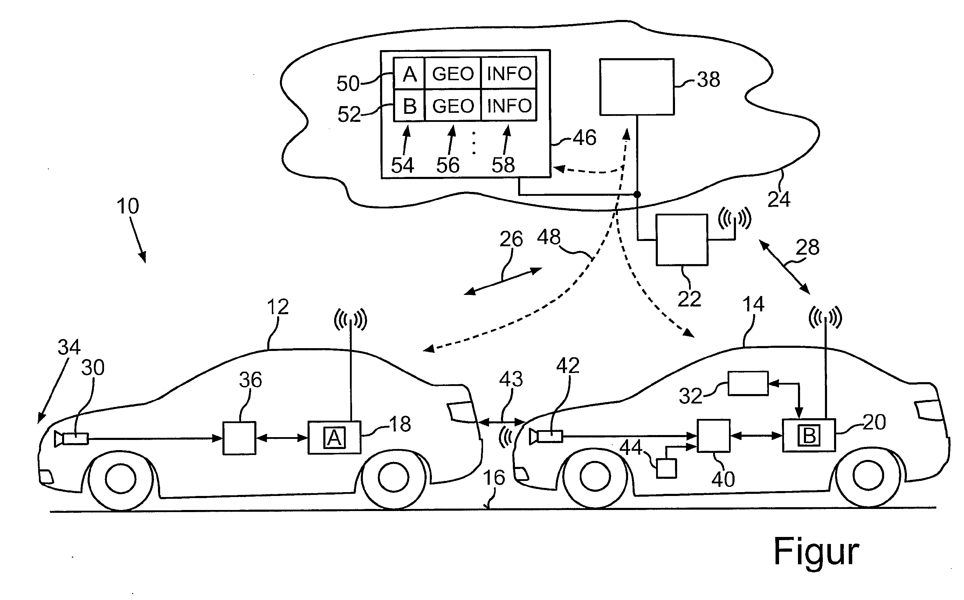

In der Figur ist in einer schematischen Darstellung eine Kraftwagenflotte 10 gezeigt, von der in der Figur ein Kraftwagen 12 und ein Kraftwagen 14 dargestellt sind. Bei den Kraftwagen 10, 12 kann es sich beispielsweise um Personenkraftwagen handeln. Die Kraftwagenflotte 10 kann weitere Kraftwagen umfassen. Die Kraftwagen 12, 14 befinden sich auf einer Fahrstrecke 16, also beispielsweise einer Straße, wie einer Autobahn oder einer Bundesstraße. Weitere Kraftwagen der Kraftfahrzeugflotte 10 können sich ebenfalls auf der Fahrstrecke 16 oder aber auch auf anderen Fahrstrecken befinden. Innerhalb der Kraftwagenflotte 10 ist es ermöglicht, dass die einzelnen Kraftwagen, also auch die Kraftwagen 12 und 14, auf anonymisierte Kamera-/Sensordaten von anderen Flottenfahrzeugen zurückgreifen können. Damit ist es ermöglicht, z.B. in einer Stausituation als Fahrer eines der Kraftwagen 12, 14 der Kraftfahrzeugflotte 10 besser einschätzen zu können, wie schwerwiegend eine Fahrverzögerung durch den Stau voraussichtlich sein wird, und entsprechend frühzeitig eine Alternativroute einzuschlagen. Auch die Alternativroute kann wiederum durch die Übermittlung entsprechender Informationen über Verkehrsaufkommen und Routenqualität (z.B. Schnee, Nässe, Verschmutzungen, Hindernisse auf der Fahrbahn oder Straßensperrungen, Breite der Straße) gewählt werden.

Für einen Austausch der Kamera- und/oder Sensordaten weisen die Kraftwagen 12, 14 der Kraftwagenflotte 10 jeweils eine Kommunikationseinrichtung 18, 20 auf. Bei einer Kommunikationseinrichtung 18, 20 kann es sich beispielsweise um ein Mobilfunkmodul beispielsweise nach dem Standard UMTS, GSM oder LTE handeln oder aber auch beispielsweise um ein WLAN-Modul (WLAN - Wireless Local Area Network). Die Kommunikationseinrichtung 18, 20 kann auch eine Car-to-Car-Kommunikationseinrichtung sein.

Im vorliegenden Beispiel sei angenommen, dass es sich bei den Kommunikationseinrichtungen 18, 20 um Mobilfunkmodule handelt, welche die Daten mit einem Mobilfunknetzwerk 22 austauschen. Über das Mobilfunknetzwerk 22, beispielsweise einem UMTS-Netzwerk oder LTE-Netzwerk oder GSM-Netzwerk, sind die Kommunikationseinrichtungen 18, 20 mit dem Internet 24 über eine jeweilige mobile Breitband-Internetverbindung 26, 28 verbunden.

Der Kraftwagen 12 weist einen Sensor 30 auf, der beispielsweise eine Videokamera, ein Ultraschallsensor oder ein Radarsensor sein kann. Ein Fahrer eines anderen Kraftwagens, z.B. hier des Kraftwagens 14, lässt sich mittels einer Anzeigeeinheit 32 des Kraftwagens 14, beispielsweise einem Infotainmentsystem oder einem Kombünstrument des Kraftwagens 14, Sensordaten des Sensors 30 anzeigen, also beispielsweise Videobilder eines Bereichs 34 vor dem Kraftwagen 12, den der Fahrer des Kraftwagens 14 von dem Kraftwagen 14 aus selbst nicht einsehen kann. Die Sensordaten des Sensors 30 werden hierzu von einer Erfassungseinrichtung 36 des Kraftwagens 12 aus dem Sensor 30 ausgelesen. Bei der Erfassungseinrichtung 36 kann es sich beispielsweise um ein Steuergerät handeln oder auch um ein Softwaremodul, das beispielsweise in einem Infotainmentsystem des Kraftwagens 12 bereitgestellt sein kann. Die Erfassungseinrichtung 36 kann zusätzlich ein Bildbearbeitungssystem aufweisen, welches sicherstellt, dass Fahrzeugkennzeichen und Gesichter aus den Videodaten vor einer Übertragung von dem Kraftwagen 12 über die Internetverbindung 26 unkenntlich gemacht werden, um die Anonymität von Fahrzeugen und Fahrern zu gewährleisten. Die für das Versenden vorbereiteten Sensordaten werden dann durch die Erfassungseinrichtung 36 an die Kommunikationseinrichtung 18 übertragen, welche die Sensordaten über die Internetverbindung 26 in das Mobilfunknetzwerk 22 überträgt. Im Falle einer WLAN-Verbindung werden die Daten entsprechend in das WLAN übertragen. Die ausgesendeten Sensordaten stellen Fahrstreckeninformationen im Sinne der Erfindung dar.

Der Kraftwagen 12 und der Kraftwagen 14 können über eine Peer-to-Peer-Verbindung verbunden sein, deren Bestandteil dann die Internetverbindungen 26, 28 sind. Es kann aber auch vorgesehen sein, dass eine zentrale Sammelstelle 38 bereitgestellt ist, welche die Sensordaten empfängt und wo die Daten auf einem Server der Sammelstelle 38 gesammelt und analysiert werden, bevor sie wieder an andere Kraftwagen, wie den Kraftwagen 14, zurückgehen. Bei der Sammelstelle kann es sich um einen mit dem Internet 24 verbundenen Servercomputer oder auch um einen Verbund mehrerer Servercomputer handeln. Durch die Sammelstelle 38 können auch weitere, von konkreten Anfragen aus der Kraftfahrzeugflotte 10 veranlasste Verkehrsanalysen durchgeführt werden. Beispielsweise kann auch der Kraftwagen 14 eine Erfassungseinrichtung 40 aufweisen, die in ihrer Funktion vergleichbar mit der Erfassungseinrichtung 36 des Kraftwagens 12 ist. Mit der Erfassungseinrichtung 40 des Kraftwagens 14 können ebenfalls Sensordaten eines Sensors 42, beispielsweise eines Ultraschallsensors oder aber auch Signale von einem Steuergerät 44 empfangen werden. Der Sensor 42 kann beispielsweise einen Abstand 43 zum vorausfahrenden Kraftwagen 12 messen. Durch das Steuergerät 44 kann beispielsweise angezeigt werden, wie schnell, der Kraftwagen 14 gerade fährt oder ob er gerade bremst. Die Erfassungseinrichtung 40 überträgt diese Informationen an die Kommunikationseinrichtung 20, welche sie über die Internetverbindung 28 an die Sammelstelle 38 überträgt. Die ausgesendeten Informationen stellen ebenfalls Fahrstreckeninformationen im Sinne der Erfindung dar.

Die Sammelstelle 38 empfängt weitere Daten dieser Art beispielsweise auch von dem Kraftwagen 12 und weiteren Kraftwagen der Kraftwagenflotte 10. Durch die Erfassung, Sammlung und Analyse der Daten auf der Fahrstrecke 16 bildet die Sammelstelle 38 Mittelwerte von beispielsweise der Fahrgeschwindigkeit der Kraftwagen und deren mittleren Abständen und erzeugt hieraus berichtsartige Informationen (Fahrstreckenbericht) über die jeweilige Fahrstrecke 16, die dann an einzelne Kraftwagen weitergeleitet werden. Im Falle des Kraftwagens 14 kann dieser Fahrstreckenbericht von der Anzeigeeinrichtung 32 empfangen und beispielsweise durch Sprachhinweise an den Fahrer ausgegeben werden, wenn ein kritischer Wert für den Mittelwert erreicht ist und eine solche Einstellung vom Fahrer des Kraftwagens 14 vorgenommen wurde. Somit ist auch sichergestellt, dass der Fahrer des Kraftwagens 14 nicht durch Videoinformationen über andere, als der eigenen Fahrstrecken abgelenkt wird. Die berichtsartigen Informationen können auch durch den Kraftwagen 14 selbst aus einer Kommunikation mit mehreren anderen Kraftwagen berechnet werden. Dies kann ebenfalls durch die Anzeigeeinrichtung 32 durchgeführt werden.

Damit in dem Kraftwagen 14 mittels der Anzeigeeinrichtung 32 Kameradaten der Kamera 30 angezeigt werden können und damit die Sammelstelle 38 für die Fahrstrecke 16 die richtigen Kraftwagen 12, 14 zum Ermitteln der benötigten Sensordaten kontaktieren kann, ist in dem Beispiel ein Peer-to-Peer-Server 46 bereitgestellt. Der Peer-to-Peer-Server 46, die Kraftwagen 12, 14 und die Sammelstelle 38 bilden Knoten eines Peer-to-Peer-Netzwerks 48, das in der Figur durch die logischen Pfade als Strichlinien repräsentiert ist. Das Peer-to-Peer-Netzwerk 48 kann beispielsweise auf der Grundlage eines der Standards "Gnutella" oder "JXTA" gebildet sein. Es kann aber auch ein speziell für die beschriebene Anwendung entworfenes Protokoll bereitgestellt sein, über welches einzelne Netzwerkteilnehmer eine Identität anderer Netzwerkteilnehmer ausfindig machen können, um von diesen anderen Netzwerkteilnehmern stammende Fahrstreckeninformationen abrufen zu können.

Der Peer-to-Peer-Server 46 speichert zum Bilden des Peer-to-Peer-Netzwerks 48 zu den Kraftwagen 12, 14 als Teilnehmerns 50, 52 am Peer-to-Peer-Netzwerks 48 jeweils einen Teilnehmerdatensatz ab, in welchem jeweils eine Netzwerkadresse 54, ein momentaner Aufenthaltsort 56 und Informationen 58 über die von den jeweiligen Teilnehmer 50, 52 abrufbaren Fahrstreckeninformationen gespeichert sind. Um nun beispielsweise mittels der Anzeigeeinrichtung 32 ein Kamerabild der Kamera 30 darstellen zu können, wird durch die Anzeigeeinrichtung 32 über die Kommunikationseinrichtung 20 eine Suchanfrage (Datensatz mit Suchbefehl) an den Peer-to-Peer-Server 46 gesendet. Der Datensatz der Suchanfrage enthält die Information, für welche Fahrstrecke 16 und für welchen Streckenabschnitt auf der Fahrstrecke 16 ein Teilnehmer des Peer-to-Peer-Netzwerks 48 gesucht wird, der Kamerabilder bereitstellt. Der Peer-to-Peer-Server 46 sucht dann in den Teilnehmerdatensätzen der Teilnehmer 50, 52 nach einem Teilnehmerdatensatz, welcher das angegebene Suchkriterium erfüllt. Im vorliegenden Beispiel hat der Peer-to-Peer-Server 46 den Teilnehmerdatensatz des Teilnehmers 50, also des Kraftwagens 12, gefunden und dem Kraftwagen 14 die Adresse 54 der Kommunikationseinrichtung 18 des Kraftwagens 12 mitgeteilt. In der Figur lautet die Adresse symbolisch "A". Bei der Adresse kann es sich um eine IP-Addresse oder um eine andere Identitätsnummer handeln. Beispielsweise kann vorgesehen sein, dass einzelne Teilnehmer des Peer-to-Peer-Netzwerks 48 nur indirekt über den Server 46 oder den Server 38 Daten austauschen.

Der Peer-to-Peer-Server 46 hat die Netzwerkadresse 54 dann an den Kraftwagen 14 über die Internetverbindung 28 gesendet so dass im Folgenden durch die Anzeigeeinrichtung 32 über die Kommunikationseinrichtung 20 beispielsweise eine Peer-to-Peer-Verbindung direkt zu dem Kraftwagen 12 aufgebaut werden konnte. Über diese Verbindung hat die Anzeigeeinrichtung 32 eine Anfrage (also einen Anfragedatensatz mit einer Angabe zu der gewünschten Fahrstreckeninformation) gesendet, welche die Erfassungseinrichtung 36 dazu veranlasst, Bilddaten der Kamera 30 über die Kommunikationseinrichtung 18 an den Kraftwagen 14 zu senden.

Genauso kann durch die Sammelstelle 38 eine Gruppe derjenigen Kraftwagen 12, 14 ermittelt werden, indem entsprechende Suchanfragen durch die Sammelstelle 38 an den Peer-to-Peer-Server 46 gesendet werden. Der Peer-to-Peer-Server 46 und die Sammelstelle 38 können auch in einem einzigen Server bereitgestellt sein.

In Verbindung mit dem Aufbau eines Peer-to-Peer-Netzwerks 48 kann man auch vorsehen, dass Fahrer einzelner Kraftwagen 12, 14, die sich auf derselben Fahrstrecke 16 befinden, über kurze, automatisch generierte Streckenberichte (unter Zuhilfenahme von Speech-to-Text-Technologie) gegenseitig informieren. Solche Nachrichten können beispielsweise die Qualität einer Alternativroute betreffen oder Hindernisse oder Besonderheiten. Hierdurch wird auch der soziale Charakter des Autofahrens gestärkt, insbesondere innerhalb derselben Kraftwagenflotte 10, falls diese beispielsweise durch Kraftwagen eines bestimmten Typs gebildet ist (Lastkraftwagen oder Sportwagen einer bestimmten Art).

Durch das Beispiel ist gezeigt, wie über eine mobile Breitband-Internetverbindung ermöglicht ist, ähnlich wie bei einem heutigen Peer-to-Peer-System für den Musikdatenaustausch, in einer Kraftwagenflotte 10 Fahrer der einzelnen Kraftwagen über direkte Kommunikation mit anderen Kraftwagen oder durch einen Zugriff auf Fahrzeugkamera-/Sensordaten anderer Kraftwagen Informationen von anderen Abschnitten einer Fahrstrecke zu übermitteln. So können Fahrer kurzfristig erfahren, was z.B. weiter vorne in einem Stau passiert oder wie eine aktuelle Situation (Wetter, Bilder) an einem geplanten Zielort ist. Zudem kann man beurteilen, welche Qualität verschiedene Routen haben (Straße, Ausblick, Wetter). Hierzu können Bilddaten von anderen Kraftwagen empfangen werden. Zusätzlich können auch Behörden für die Verwaltung und Sicherung von Straßen aktuelle Informationen über Hindernisse (beispielsweise Wildtiere, Gegenstände auf der Fahrbahn, Unfälle und eine Einschätzung der Schwere eines Unfalls) ermitteln. Hierdurch können auch Flotteninformationen schneller auf aktuelle Gegebenheiten angepasst werden und Hindernisse schnellstmöglich entfernt werden oder andere Autofahrer genauer vor dem Ort und der Art eines Hindernisses auf einer Fahrbahn gewarnt werden.

## Patentansprüche

1. Verfahren zum Bereitstellen einer aktuellen Fahrstreckeninformation über eine Verkehrssituation auf einer Fahrstrecke (16) und/oder über den Zustand der Fahrstrecke (16), wobei durch zumindest einen Kraftwagen (12, 14):
- durch eine Kommunikationseinrichtung (18, 20) des Kraftwagens (12, 14) eine Kommunikationsverbindung (26, 28) zu einem Peer-to-Peer-Netzwerk (48) aufgebaut und der Kraftwagen (12, 14) dort als ein Teilnehmer (50, 52) des Peer-to-Peer-Netzwerks (48) angemeldet wird, sodass eine Kommunikationsadresse (54) des Kraftwagens (12, 14) durch zumindest einen anderen Teilnehmer (50, 52) des Peer-to-Peer-Netzwerks (48) ermittelbar ist,
- durch die Kommunikationseinrichtung (18, 20) von dem zumindest einen anderen Teilnehmer (50, 52) jeweils eine Anfrage betreffend die Fahrstreckeninformation empfangen wird und
- die Fahrstreckeninformation durch eine Erfassungseinrichtung (36, 40) des Kraftwagens (12, 14) ermittelt und durch die Kommunikationseinrichtung (18, 20) an den anfragenden Teilnehmer gesendet wird;
**dadurch gekennzeichnet, dass**
a) durch die Erfassungseinrichtung (36, 40) von einer in dem Kraftwagen (12, 14) befindlichen Person eine Eingabe eines Streckenberichts empfangen wird und diese als Bestandteil der Fahrstreckeninformation an die Kommunikationseinrichtung (18, 20) ausgegeben wird, wobei durch die Erfassungseinrichtung (36, 40) der Streckenbericht als ein Sprachsignal empfangen und das Sprachsignal mittels einer Speech-to-Text-Technologie in Textdaten umgewandelt wird, und/oder
b) durch eine Analyseeinrichtung (36, 40) des Kraftwagens von einem Fahrverhalten des Kraftwagens (12, 14) abhängige Betriebsdaten des Kraftwagens (12, 14) ermittelt werden und zumindest ein Teil der Fahrstreckeninformation auf Grundlage der Betriebsdaten erzeugt wird, wobei
b1) anstelle der Betriebsdaten kompaktere Analysedaten mit einem fertigen Analyseergebnis übermittelt werden und hierbei die Aktivität eines aktiven Fahrwerks anhand von einzelnen Steuersignalen des aktiven Fahrwerks analysiert und hieraus auf die Straßenqualität Rückschlüsse gezogen und dann ein entsprechendes, die Straßenqualität beschreibendes Signal als Fahrstreckeninformation übermittelt wird, so dass eine zum Übertragen der Fahrstreckeninformation benötigte Bandbreite kleiner ist als eine Bandbreite, die zum Übertragen der einzelnen Steuersignale nötig wäre, und/oder wobei
b2) als Fahrstreckeninformation ein Hinweis auf einen Stau oder stockenden Verkehr ausgegeben wird, falls erkannt wird, dass eine Häufigkeit von Bremsmanövern innerhalb eine vorbestimmten Zeitraums größer als ein Grenzwert ist.

2. Verfahren nach einem der vorhergehenden Ansprüche, wobei durch die Kommunikationseinrichtung (18, 20) an das Peer-to-Peer-Netzwerk (48) zumindest einmal, bevorzugt wiederholt in vorbestimmten Zeitabständen, Beschreibungsdaten (56, 58) des Kraftwagens (12, 14) gesendet werden, durch welche ein Typ (58) der Fahrstreckeninformation und/oder eine aktuelle Position (56) des Kraftwagens (12, 14) angegeben wird.

3. Verfahren nach einem der vorhergehenden Ansprüche, wobei durch die Erfassungseinrichtung (36, 40) Sensordaten zu einer Umgebung (34) des Kraftwagens (12, 14) erfasst und als Bestandteil der Fahrstreckeninformation an die Kommunikationseinrichtung (18, 20) ausgegeben werden.

4. Verfahren nach Anspruch 3, wobei durch die Erfassungseinrichtung (36, 40) die Sensordaten mittels zumindest eines des folgenden Sensoren erfasst werden: eine Kamera (30), einen Regensensor, ein Thermometer, einen Abstandssensor (42), ein Geschwindigkeitssensor (44).

5. Verfahren nach einem der vorhergehenden Ansprüche, wobei die Fahrstreckeninformation zumindest ein Kamerabild umfasst und durch eine Bildverarbeitungseinrichtung (36) in dem zumindest einen Kamerabild zumindest ein vorbestimmtes Objekt gesucht und unkenntlich gemacht wird.

6. Verfahren nach Anspruch 5, wobei als das zumindest eine vorbestimmte Objekt ein Fahrzeugkennzeichen und/oder ein Gesicht gesucht und unkenntlich gemacht wird.

7. Verfahren nach einem der vorhergehenden Ansprüche, wobei durch eine Anzeigeeinrichtung (32) des Kraftwagens (14) an zumindest einen anderen Kraftwagen (12) eine jeweilige Anfrage ausgesendet wird und eine von dem zumindest einen anderen Kraftwagen (12) erzeugte Fahrstreckeninformation empfangen und alle empfangenen Fahrstreckeninformationen angezeigt und/oder analysiert und ein Ergebnis der Analyse angezeigt wird.

8. Serveranordnung (38) des Internets (24), welche dazu ausgelegt ist, an zumindest einen Kraftwagen (12, 14), der Teilnehmer eines Peer-to-Peer-Netzwerks (48) ist und jeweils ein Verfahren nach einem der Ansprüche 1 bis 7 durchführt, eine jeweilige Anfrage zu einer Fahrstreckeninformation zu senden und eine jeweilige Fahrstreckeninformationen von jedem Kraftwagen (12, 14) zu empfangen und in Abhängigkeit von allen empfangenen Fahrstreckeninformationen einen Fahrstreckenbericht an zumindest einen Benutzer der Serveranordnung (38) zu senden, wobei die Serveranordnung (38) dazu ausgelegt ist, Anfragen an mehrere Kraftwagen (12, 14) zu senden und von diesen jeweilige Fahrstreckeninformationen zu empfangen und die empfangenen Fahrstreckeninformationen gemäß einer vorbestimmten Verarbeitungsvorschrift zu dem Fahrstreckenbericht zusammenzufassen,
**dadurch gekennzeichnet, dass**
die Serveranordnung zusätzlich dazu ausgelegt ist, einen Wert betreffend eine Dringlichkeit des Fahrstreckenberichts zu ermitteln und den Fahrstreckenbericht nur dann an zumindest einen vorbestimmten Benutzer zu senden, falls der Wert ein vorbestimmtes Dringlichkeitskriterium erfüllt.

9. Kraftwagen (12, 14), welcher dazu ausgelegt ist,
- a) eine Fahrstreckeninformation in einem Peer-to-Peer-Netzwerk (48) nach einem Verfahren gemäß einem der Ansprüche 1 bis 7 bereitzustellen und/oder
- b) einen Fahrstreckenbericht von einer Serveranordnung (38) gemäß Anspruch 8 zu empfangen und an einen Fahrer des Kraftwagens auszugeben.

10. Kraftwagen nach Anspruch 9, wobei im Fall b) die Ausgabe als akustisches Sprachsignal erfolgt.

11. Computerprogrammprodukt mit einem auf zumindest einem Speichermedium gespeicherten Programmcode, welcher dazu ausgelegt ist, bei Ausführung durch ein mobiles Endgerät oder einen Personalcomputer an zumindest einen Kraftwagen (12, 14), der Teilnehmer eines Peer-to-Peer-Netzwerks (48) ist und jeweils ein Verfahren nach einem der Ansprüche 1 bis 7 durchführt, eine jeweilige Anfrage zur Fahrstreckeninformation auszusenden und eine jeweilige Fahrstreckeninformationen von jedem Kraftwagen (12, 14) zu empfangen und/oder von einer Serveranordnung (38) gemäß Anspruch 8 einen Fahrstreckenbericht zu empfangen und auszugeben, **dadurch gekennzeichnet, dass**
der Programmcode dazu ausgelegt ist, bei der Ausführung Kalenderdaten einer Termindatenbank des mobilen Endgeräts oder des Personalcomputers dahingehend auszuwerten, wann sich ein Benutzer des mobilen Endgeräts oder Personalcomputers voraussichtlich auf einer bestimmten Fahrstrecke befinden wird, und dann in einem vorbestimmten Zeitraum vor diesem Termin zu den einzelnen Fahrstreckenabschnitten dieser Fahrstrecke a) von dort befindlichen Kraftwagen über das Peer-to-Peer-Netzwerk Fahrstreckeninformationen anzufragen und dem Benutzer bereitzustellen oder b) von einer Serveranordnung einen Fahrstreckenbericht zu den einzelnen Fahrstreckenabschnitten zu den gegebenen Zeitpunkten anzufordern.

## Claims

1. Method for providing current route information on a traffic situation on a route (16) and/or on a condition of the route (16), the method comprising, in at least one motor vehicle (12, 14):
- setting up a communication link (26, 28) to a peer-to-peer network (48) by a communication device (18, 20) of the motor vehicle (12, 14) and signing in the motor vehicle (12, 14) as a subscriber (50, 52) of the peer-to-peer network (48), such that a communication address (54) of the motor vehicle (12, 14) can be determined by at least one second subscriber (50, 52) of the peer-to-peer network (48),
- receiving a request relating to the route information by the communication device (18, 20) from the at least one second subscriber (50, 52), and
- determining the route information by a sensing device (36,40) of the motor vehicle (12, 14) and transmitting the route information to the requesting subscriber by the communication device (18, 20);
**characterized in that**
a) an input of a route report is received from a person located in the motor vehicle (12, 14) by the sensing device (36,40) and is output as part of the route information to the communication device (18, 20), wherein the route report is received as a speech signal by the sensing device (36, 40) and the speech signal is converted into text data using speech-to-text technology, and/or
b) operating data of the motor vehicle (12, 14) dependent on the driving behaviour of the motor vehicle (12, 14) are determined by an analysis device (36, 40) of the motor vehicle and at least part of the route information is generated based on the operating data, wherein
b1) instead of the operating data more compact analysis data are transmitted with completed analysis results, wherein the activity of an active chassis is analysed based on individual control signals of the active chassis to draw conclusions about road quality and then transmit as route information a corresponding signal describing the road quality, such that a bandwidth required to transmit the route information is smaller than a bandwidth required to transmit the individual control signals, and/or wherein
b2) an indication of a traffic jam or slow moving traffic is output as route information if it is detected that a frequency of braking manoeuvres within a predetermined time is greater than a threshold value.

2. Method according to any of the preceding claims, wherein description data (56, 58) of the motor vehicle (12, 14) are transmitted by the communication device (18, 20) to the peer-to-peer network (48) at least once, and preferably repeatedly at predetermined time intervals, the description data identifying a type (58) of the route information and/or a current position (56) of the motor vehicle (12, 14).

3. Method according to any of the preceding claims, wherein sensor data relating to a surrounding (34) of the motor vehicle (12, 14) are collected by the sensing device (36, 40) and are output to the communication device (18, 20) as part of the route information.

4. Method according to claim 3, wherein the sensor data are collected by the sensing device (36, 40) using at least one of the following sensors: a camera (30), a rain sensing device, a thermometer, a distance sensing device (42), a speed sensing device (44).

5. Method according to any of the preceding claims, wherein the route information comprises at least one camera image, and at least one predetermined object is located in the at least one camera image and made unidentifiable by an image processing device (36).

6. Method according to claim 5, wherein the at least one predetermined object located and made unidentifiable is a vehicle number plate and/or the face of a person.

7. Method according to any of the preceding claims, wherein a respective request is sent by a display device (32) of the motor vehicle (14) to at least one second motor vehicle (12), and route information generated by the at least one second motor vehicle (12) is received, and all received route information is displayed and/or analysed and a result of the analysis is displayed.

8. An internet (24) server device (38) configured to send a respective request relating to a route information to at least one motor vehicle (12, 14) that is a subscriber of a peer-to-peer network (48) and respectively carries out a method according to any of claims 1 to 7, and to receive a respective route information from each motor vehicle (12, 14), and, based on all received route information, to send a route report to at least one user of the server device (38), wherein the server device (38) is configured to send requests to multiple motor vehicles (12, 14) and to receive respective route information from the motor vehicles and to summarize the received route information to a route report in accordance with a predetermined processing rule,
**characterized in that**
the server device is further configured to determine a value relating to an urgency of the route report and to transmit the route report to at least one predetermined user only if the value satisfies a predetermined urgency criteria.

9. Motor vehicle (12, 14), configured to
a) provide route information in a peer-to-peer network (48) using a method according to any of claims 1 to 7, and/or
b) receive a route report from a server device (38) according to claim 8 and output the route report to a driver of the motor vehicle.

10. Motor vehicle according to claim 9, wherein in the case of b) the route report is output as an acoustic speech signal.

11. Computer program product having a program code stored on at least one storage medium, the program code being configured, when executed by a mobile terminal or a personal computer, to send a respective request relating to route information to at least one motor vehicle (12, 14), the at least one motor vehicle being a subscriber of a peer-to-peer network (48) and respectively carrying out a method according to any of claims 1 to 7, and to receive respective route information from each motor vehicle (12, 14) and/or to receive and output a route report from a server device (38) according to claim 8,
**characterized in that**
the program code is configured to analyse during execution calendar data of a schedule database of the mobile terminal or the personal computer to determine when a user of the mobile terminal or personal computer will be expected to be located on a particular route and then, in a predetermined period of time before that time, a) to request, via the peer-to-peer network, from motor vehicles located there, route information on individual route sections of the route, and to provide the route information to the user, or b) to request from a server device a route report on the individual route sections at the respective time.

## Revendications

1. Procédé pour fournir une information de trajet courante sur la situation de trafic d'un trajet (16) et/ou sur l'état du trajet (16), dans lequel dans au moins un véhicule à moteur (12, 14) :
- une liaison de communication (26, 28) avec un réseau poste à poste (48) est élaborée par un dispositif de communication (18, 20) du véhicule à moteur (12, 14) et le véhicule à moteur (12, 14) y est enregistré comme abonné (50, 52) du réseau poste à poste (48) de sorte qu'une adresse de communication (54) du véhicule à moteur (12, 14) puisse être déterminée par au moins un autre abonné (50, 52) du réseau poste à poste (48),
- respectivement une demande concernant l'information de trajet est reçue par le dispositif de communication (18, 20) du au moins un autre abonné (50, 52) et
- l'information de trajet est déterminée par un dispositif d'acquisition (36, 40) du véhicule à moteur (12, 14) et envoyée par le dispositif de communication (18, 20) à l'abonné demandeur;
**caractérisé en ce que** :
a) une entrée d'un rapport de trajet est reçue par le dispositif d'acquisition (36, 40) d'une personne se trouvant dans le véhicule à moteur (12, 14) et cette entrée est délivrée comme composant de l'information de trajet au dispositif de communication (18, 20), dans lequel le rapport de trajet est reçu par le dispositif d'acquisition (36, 40) sous la forme d'un signal vocal et le signal vocal est converti en données de texte au moyen d'une technologie voix-texte, et/ou
b) des données de fonctionnement du véhicule à moteur (12, 14), qui dépendent d'un comportement de conduite du véhicule à moteur (12, 14), sont déterminées par un dispositif d'analyse (36, 40) du véhicule à moteur et au moins une partie de l'information de trajet est produite sur la base des données de fonctionnement, dans lequel,
b1) au lieu des données de fonctionnement, des données d'analyse plus compactes avec un résultat d'analyse final sont transmises et, en l'occurrence, l'activité d'un mécanisme de roulement actif est analysée au moyen de signaux de commande individuels du mécanisme de roulement actif et on en tire des conclusions sur la qualité de la route, puis un signal correspondant décrivant la qualité de la route est transmis comme information de trajet de sorte qu'une largeur de bande nécessaire pour le transfert de l'information de trajet soit plus petite qu'une largeur de bande qui serait nécessaire pour le transfert des signaux de commande individuels et/ou dans lequel,
b2) comme information de trajet, on délivre une indication sur un embouteillage ou un trafic ralenti au cas où l'on constate que la fréquence de manoeuvres de freinage dans un espace de temps prédéterminé est plus grande qu'une valeur limite.

2. Procédé selon l'une quelconque des revendications précédentes, dans lequel le dispositif de communication (18, 20) envoie au réseau poste à poste (48) une fois, de préférence de manière répétée à intervalles de temps prédéterminés, des données de description (56, 58) du véhicule à moteur (12, 14), par lesquelles un type (58) d'information de trajet et/ou une position courante (56) du véhicule à moteur (12, 14) est ou sont indiqués.

3. Procédé selon l'une quelconque des revendications précédentes, dans lequel des données de capteurs sur un environnement (34) du véhicule à moteur (12,14) sont saisies par le dispositif d'acquisition (36, 40) et sont délivrées au dispositif de communication (18, 20) comme composant de l'information de trajet.

4. Procédé selon la revendication 3, dans lequel les données de capteurs sont saisies par le dispositif d'acquisition (36, 40) au moyen d'au moins l'un des capteurs suivants : une caméra (30), un capteur de pluie, un thermomètre, un capteur de distance (42) et un capteur de vitesse (44).

5. Procédé selon l'une quelconque des revendications précédentes, dans lequel l'information de trajet comprend au moins une image de caméra et au moins un objet prédéterminé (36) est recherché et pixellisé par un dispositif de traitement d'images dans la au moins une image de caméra.

6. Procédé selon la revendication 5, dans lequel on recherche et/ou l'on pixellise comme le au moins un objet prédéterminé une caractéristique du véhicule et/ou une face.

7. Procédé selon l'une quelconque des revendications précédentes, dans lequel une demande respective est émise par un dispositif d'affichage (32) du véhicule à moteur (14) vers au moins un autre véhicule à moteur (12) et une information de trajet produite par le au moins un autre véhicule à moteur (12) est reçue et toutes les informations de trajet reçues sont affichées et/ou analysées et un résultat de l'analyse est affiché ;

8. Dispositif serveur (38) de l'Internet (24), qui est conçu en sorte d'envoyer à au moins un véhicule à moteur (12, 14), qui est abonné d'un réseau poste à poste (48) et effectue un procédé selon l'une quelconque des revendications 1 à 7, une demande respective d'information de trajet, de recevoir une information de trajet respective de chaque véhicule à moteur (12,14) et d'envoyer, en fonction de toutes les informations de trajet reçues, un rapport de trajet à au moins un utilisateur du dispositif serveur (38), dans lequel le dispositif serveur (38) est conçu de manière à envoyer des demandes à plusieurs véhicules à moteur (12, 14), recevoir de ceux-ci des informations de trajet respectives et regrouper les informations de trajet reçues sous la forme d'un rapport de trajet selon une prescription de traitement prédéterminée,
**caractérisé en ce que** :
le dispositif serveur est conçu en outre pour déterminer une valeur concernant une priorité du rapport de trajet et envoyer le rapport de trajet seulement alors à au moins un utilisateur prédéterminé au cas où la valeur satisfait à un critère de priorité prédéterminé.

9. Véhicule à moteur (12, 14) qui est conçu pour :
- a) fournir une information de trajet dans un réseau poste à poste (48) par un procédé selon l'une quelconque des revendications 1 à 7 et/ou
- b) recevoir un rapport de trajet d'un dispositif serveur (38) selon la revendication 8 et le délivrer à un chauffeur du véhicule à moteur.

10. Véhicule à moteur selon la revendication 9, dans lequel, dans le cas b), la délivrance se fait sous la forme d'un signal vocal acoustique.

11. Produit de programmation informatique avec un code de programmation mémorisé sur au moins un support de stockage, qui est conçu de manière à envoyer, lors de sa réalisation par un poste terminal mobile ou un ordinateur personnel, à au moins un véhicule à moteur (12, 14), qui est abonné d'un réseau poste à poste (48) et réalise respectivement un procédé selon l'une quelconque des revendications 1 à 7, une demande respective d'information de trajet et recevoir une information de trajet respective de chaque véhicule à moteur (12, 14) et/ou recevoir et délivrer d'un dispositif serveur (38) selon la revendication 8 un rapport de trajet,
**caractérisé en ce que** :
le code de programmation est conçu pour, lors de la réalisation, évaluer des données calendrier d'une banque de données de dates du poste terminal mobile ou de l'ordinateur personnel en sorte, lorsqu'un utilisateur du poste terminal mobile ou de l'ordinateur personnel s'est trouvé probablement sur un trajet déterminé, puis, dans un espace de temps prédéterminé avant cette date dans les sections individuelles de ce trajet, a) de demander à des véhicules à moteur qui s'y sont trouvés des informations de trajet via le réseau poste à poste et les fournir à l'utilisateur ou b) de demander à un dispositif serveur un rapport de trajet sur les sections de trajet individuelles aux dates données.
